# EUROPÄISCHE PATENTSCHRIFT

(11) **EP 3 041 617 B1**
(45) Veröffentlichungstag und Bekanntmachung des Hinweises auf die Patenterteilung: **14.06.2017**
(21) Anmeldenummer: 14796658.4
(22) Anmeldetag: 27.08.2014
(51) Int. Cl.: B21D 5/00, B21D 5/02, G01B 11/26

(54) **BIEGEWERKZEUGANORDNUNG ZUR ERMITTLUNG DES BIEGEWINKELS**
BENDING TOOL ASSEMBLY FOR DETERMINING THE BENDING ANGLE
ENSEMBLE OUTIL DE PLIAGE PERMETTANT DE DÉTERMINER L'ANGLE DE PLIAGE

(30) Priorität: 03.09.2013 AT 505442013
(43) Veröffentlichungstag der Anmeldung: 13.07.2016
(73) Patentinhaber: Trumpf Maschinen Austria GmbH & CO. KG., 4061 Pasching (AT)
(72) Erfinder: MAYRHOFER, Johann, A-4542 Nussbach (AT)
(74) Vertreter: Burger, Hannes
(86) Internationale Anmeldenummer: PCT/AT2014/050188
(87) Internationale Veröffentlichungsnummer: WO 2015/031923

(56) Entgegenhaltungen:
- WO-A1-01/28706
- US-A- 5 367 902
- US-A- 5 531 087

## Beschreibung

Die Erfindung betrifft eine Biegewerkzeuganordnung zur Ermittlung des Biegewinkels mit einer Stempelanordnung und einer Gesenkanordnung.

Für die Herstellung formgenauer Biegeteile ist die Einhaltung der konstruktiv geforderten Biegewinkel von besonderer Bedeutung. Daher wird versucht, bereits während des Biegevorgangs den ausgebildeten Winkel zu ermitteln, diesen mit dem gewünschten Soll-Winkel zu vergleichen und den Biegevorgang so lange durchzuführen, bis der gewünschte Biegewinkel erreicht wurde. Bevorzugt sind dazu kontaktlos arbeitende Messsysteme in Verwendung, da bei kontaktbehafteten Systemen stets die Gefahr einer möglichen Beschädigung durch den Biegevorgang gegeben ist. Als Beispiel für ein optisch wirkendes System offenbart die WO 01/28706 A1 eine Biegewerkzeuganordnung, bei der über Strahlengänge im Biegewerkzeug ein Lichtmuster auf die Innenseite des Werkstücks projiziert wird und dieses projizierte Linienmuster von einem Kamerasystem ausgewertet wird.

Auch die Dokumente US 5,367,902 A und US 5,531,087 A offenbaren eine Biegewinkelmessvorrichtung, bei der zur Ermittlung des Biegewinkels ein Lichtmuster auf eine Seite des Werkstücks projiziert wird. Dieses Muster wird von einem Bilderfassungssystem aufgenommen und die durch die Biegung entstehende Verzerrung des Lichtmusters ausgewertet.

Bei den aus dem Stand der Technik bekannten Verfahren ist es erforderlich, dass ein Licht- bzw. Streifenmuster auf die Blechoberfläche projiziert wird und diese Projektion von einem Bilderfassungsmittel aufgenommen wird. Aufgrund unterschiedlicher Oberflächeneigenschaften hinsichtlich der Reflexion, kann es nun bei solchen Verfahren vorkommen, dass das Lichtmuster vom Bilderfassungsmittel nicht zuverlässig erfasst werden kann und somit eine Ermittlung des Biegewinkels nicht durchgeführt werden kann. Insbesondere besteht ferner aufgrund der beengten, räumlichen Gegebenheiten im Bereich des Biegewerkzeugs die Schwierigkeit, einerseits die Beleuchtungsvorrichtung und Bilderfassungsvorrichtung unterzubringen, ohne den Biegeprozess zu verkomplizieren. Des Weiteren haben Metalloberflächen den Nachteil, dass diese zumeist recht stark reflektieren, insbesondere spiegeln, oder dass sie sehr stark absorbieren. Eine Projektion eines Streifenmusters und zuverlässige Erfassung desselben birgt oftmals sehr große Probleme, weil das projizierte Streifenmuster nicht mit ausreichendem Kontrast erfasst werden kann.

Es ist Aufgabe der Erfindung eine Vorrichtung zu schaffen, welche während der Durchführung der Biegeumformung berührungslos den sich ausbildenden Biegewinkel ermittelt und welche ferner weitestgehend unabhängig von der Oberflächenqualität des umzuformenden Bleches, die Ermittlung des Biegewinkels ermöglicht.

Die Aufgabe der Erfindung wird durch eine Biegewerkzeuganordnung zur Ermittlung des Biegewinkels gelöst, welche eine Stempelanordnung und eine Gesenkanordnung umfasst, wobei die Stempelanordnung aus zumindest einem Biegestempel und die Gesenkanordnung aus zumindest einem Biegegesenk gebildet ist. Ferner sind eine Biege-Kontaktfläche der Stempelanordnung und zumindest eine Biege-Kontaktfläche der Gesenkanordnung parallel zueinander und parallel zu einer Biegelinie ausgerichtet. Ferner ist in der Stempelanordnung oder in der Gesenkanordnung eine optische Bilderfassungsvorrichtung mit einem Objektiv angeordnet, wobei das Objektiv auf einen Abschnitt parallel zur Biegelinie ausgerichtet ist und wobei das Objektiv mehrere diskrete Brennweiten aufweist.

Bei der Durchführung der Biegeanordnung wird ein Blechteil in die geöffnete Biegewerkzeuganordnung eingelegt, diese geschlossen und von der Biegepresse Druck aufgebaut, so dass die Stempelanordnung und die Gesenkanordnung weiter aufeinander zubewegt werden und so die Biegeumformung durchgeführt wird. Durch die Ausrichtung des Objektivs der Bilderfassungsvorrichtung ist gewährleistet, dass ein Abschnitt, welcher sich parallel zur Biegelinie erstreckt, von der Bilderfassungsvorrichtung aufgenommen wird. Da aufgrund der örtlichen Gegebenheiten bei einer Biegeumformung mit einer Biegepresse, in diesem Abschnitt auch das umzuformende Blechteil vorhanden ist bzw. dass der Abschnitt einen Teil des umzuformenden Bleches abdeckt, ist jedenfalls gewährleistet, dass sich zumindest ein Bereich des sich aufbiegenden Bleches, im Erfassungsbereich des Objektivs befindet und während der Biegeumformung erfasst wird. Insbesondere wird die Oberfläche des sich umformenden Blechteils erfasst.

Alternativ dazu wird die Aufgabe der Erfindung auch dadurch gelöst, dass in der Stempelanordnung oder in der Gesenkanordnung eine optische Bilderfassungsvorrichtung mit mehreren Objektiven angeordnet ist, wobei die Objektive auf einen Abschnitt parallel zur Biegelinie ausgerichtet sind und wobei jedes Objektiv eine diskrete Brennweite aufweist.

Wie zuvor wird auch durch diese Ausführung gewährleistet, dass zumindest ein Abschnitt des umzuformenden Bleches von den Objektiven der Bilderfassungsvorrichtung während der Biegeumformung erfasst wird.

Gemäß einer Weiterbildung ist vorgesehen, dass das Objektiv als Fächerlinse bzw. Fresnel-Linse ausgebildet ist. Eine derartig ausgeführte Linse ermöglicht eine kompakte Realisierung kleiner Brennweiten. Insbesondere kann dadurch ein Objektiv mit unterschiedlichen Brennweiten realisiert werden.

Gemäß einer Weiterbildung ist vorgesehen, dass das Objektiv einen Strahlteiler aufweist. Da der Abschnitt durch ein Objektiv mit mehreren Brennweiten oder durch mehrere Objektive erfasst wird, ist es mit dieser Weiterbildung in vorteilhafter Weise möglich, die einzelnen eintreffenden Lichtstrahlen gezielt und ohne manuelle Einstellungen auf ein Bilderfassungsmittel der Bilderfassungsvorrichtung umzulenken.

Nach einer Weiterbildung ist es vorgesehen, dass das Objektiv eine einstellbare Brennweite aufweist. Mit dieser Ausbildung lässt sich eine individuellere Anpassung der Brennweite an den zu erfassenden Abschnitt erreichen.

Eine Weiterbildung besteht ferner darin, dass die Bilderfassungsvorrichtung einen flächigen Bildsensor aufweist.

Nach Weiterbildungen ist vorgesehen dass die Bilderfassungsvorrichtung ein Kontrastauswertungs- bzw. ein Phasenvergleichsmodul aufweist, oder dass die Bilderfassungsvorrichtung einen Linien- und/oder einen Kreuzsensor aufweist. Derartige Sensoren sind in vorteilhafter Weise dazu geeignet einen statischen bzw. einen dynamischen Fokuspunkt zu ermitteln.

Eine Weiterbildung besteht auch darin, dass die Bilderfassungsvorrichtung einen Befestigungsabschnitt aufweist, welcher als magnetische Haltevorrichtung ausgebildet ist. Diese Weiterbildung hat den Vorteil, dass die Bilderfassungsvorrichtung jederzeit, insbesondere auch nachträglich, an der Biegewerkzeuganordnung angebracht werden kann. Mit dieser Ausbildung ist es auch möglich, die Bilderfassungsvorrichtung bspw. am Pressenbalken anzubringen.

Eine Weiterbildung besteht ferner auch darin, dass die Bilderfassungsvorrichtung in einer Ausnehmung des Biegestempels oder des Biegegesenks angeordnet ist. Diese Ausbildung hat den Vorteil, dass die Bilderfassungsvorrichtung durch die Stempelanordnung bzw. durch die Gesenkanordnung weitestgehend vor Beschädigungen bspw. durch das sich umformende Blech, geschützt ist. Auch kann durch diese Ausbildung erreicht werden, dass die vorhandene Bilderfassungsvorrichtung den, durch die jeweilige Kombination aus Biegepresse und Biegewerkzeuganordnung erreichbaren maximalen Biegewinkel, nicht beeinträchtigt.

Nach einer Weiterbildung ist vorgesehen, dass die Bilderfassungsvorrichtung eine Beleuchtungsvorrichtung aufweist. Da vom Objektiv ein Abschnitt der Oberfläche des Bleches erfasst wird, kommt es sehr auf die Blechoberfläche an, wie gut sich ein Fokuspunkt auf der Blechoberfläche ermitteln lässt. Insbesondere bei sehr glatten, beinahe spiegelnden Oberflächen, bzw. bei sehr matten Oberflächen kann es ggf. vorkommen, dass das von der Oberfläche reflektierte Umgebungslicht für eine zuverlässige Ermittlung des Fokuspunkts nicht ausreicht. Durch eine Beleuchtungsvorrichtung kann dieser Nachteil ausgeglichen werden. Gegebenenfalls kann die Beleuchtungsvorrichtung derart ausgebildet sein, dass sie ein Lichtmuster auf die Blechoberfläche projiziert, bspw. ein Streifen- oder Gittermuster.

Die Aufgabe der Erfindung wird auch durch ein Verfahren zur Ermittlung des Biegewinkels während der Biegung eines Blechteils gelöst, wobei das Verfahren auf einer Biegepresse mit einer gegenständlichen Biegewerkzeuganordnung ausgeführt wird. Die Stempel- und Gesenkanordnung der Biegewerkzeuganordnung kann mittels eines, von einer Maschinensteuerung gesteuerten Antriebsmittel, relativ zueinander bewegt werden. Ferner wird ein zu biegender Blechteil in einer Offenstellung der Stempel- und Gesenkanordnung eingelegt und anschließend die Stempel- und Gesenkanordnung soweit geschlossen, bis die Stempelanordnung das Blechteil entlang der Biegelinie kontaktiert. Anschließend wird vom Antriebsmittel der Biegepresse auf die Stempel- und/oder Gesenkanordnung ein Pressdruck aufgebracht wird, wodurch sich die Stempel- und Gesenkanordnung weiter aufeinander zubewegen und somit die Biegeumformung des Blechteils durchführen. Dabei wird von der Optik der Bilderfassungsvorrichtung eine der Bilderfassungsvorrichtung zugewandte Oberfläche des Blechteils erfasst und für eine Brennweite ein Fokussignal generiert. Ferner wird das von der Maschinensteuerung das generierte Fokussignal mit einem Referenz-Fokussignal verglichen wird und bei Übereinstimmung das Antriebsmittel gestoppt wird.

Durch die Ermittlung des Fokussignals kann mittels der bekannten Brennweite des Objektivs ein Abstand zwischen einer Referenzebene, welche zumeist das Objektiv sein wird, und der Oberfläche des sich aufbiegenden Bleches ermittelt werden. In diesem Fall wird ein Absolutwinkel ermittelt. Die Referenzebene kann aber auch durch das eingelegte Blech gebildet sein, so dass in diesem Fall relative Winkel ermittelt werden können.

Bei Betrachtung einer Brennweite des bzw. eines Objekts wird während des Aufbiegens des Bleches, das Fokussignal von einem Unscharf-Grenzwert (- out of focus) über die Scharfstellung (in focus) zum anderen Unscharf-Grenzwert (+ out of focus) laufen. Durch Auswertung des erfassten Abbilds mittels eines Kontrastauswertungs- bzw. ein Phasenvergleichsmoduls bzw. mittels eines Linien- und/oder einen Kreuzsensor, kann durch Kenntnis der jeweiligen aktuellen Brennweite, ein Abstandswert zur Blechoberfläche ermittelt werden. Durch Einbeziehung eines Referenzpunkts, kann daraus ein Biegewinkel absolut oder relativ, ermittelt werden.

Beim Übergang zwischen zwei Brennweiten eines Objektivs bzw. beim Übergang zwischen zwei Objektiven, kommt es zu einem sprunghaften Wechsel von einem Extrema des Unscharf-Grenzwertes zum anderen Extrema. Gemäß einer Weiterbildung wird daher das ermittelte Fokussignal während der Biegeumformung einen nicht-stetigen Verlauf ausbilden, wobei durch Auswertung der Unstetigkeitsstellen, ein Biegewinkelbereich ermittelt wird. Jeder dieser Fokusbereiche (festgelegt durch jeweils eine Brennweite) korrespondiert somit mit einem Winkelbereich. Durch Zählen der Sprungstellen kann somit grob der erreichte Winkelbereich ermittelt werden. Im relevanten Bereich wird dann der tatsächliche Wert bzw. Verlauf genau ausgewertet, bis der gewünschte Biegewinkel erreicht ist.

Zum besseren Verständnis der Erfindung wird diese anhand der nachfolgenden Figuren näher erläutert.

Es zeigen jeweils in stark vereinfachter, schematischer Darstellung:
- Fig. 1: a) und b) eine schematische Darstellung einer ersten Ausführung der gegenständlichen Biegewerkzeuganordnung;
- Fig. 2: eine vereinfachte Darstellung einer zweiten Ausführung der gegenständlichen Biegewerkzeuganordnung;
- Fig. 3: mögliche weitere Ausführungsformen der gegenständlichen Biegewerkzeuganordnung.

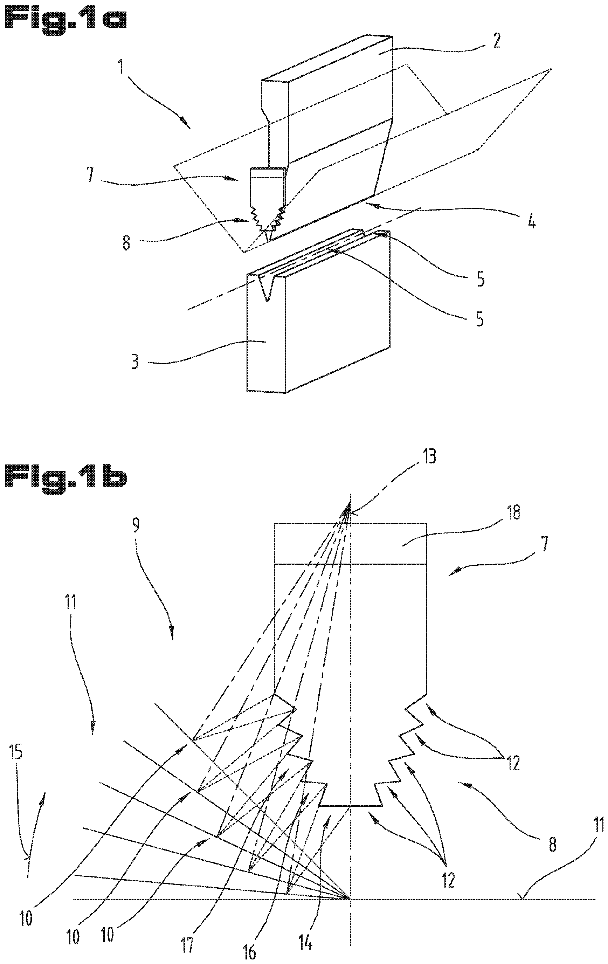

Fig. 1 zeigt eine Biegewerkzeuganordnung 1 zur Ermittlung des Biegewinkels, welche eine Stempelanordnung 2 und eine Gesenkanordnung 3 umfasst. Zur Erreichung einer entsprechenden Breite der Biegewerkzeuganordnung 1 können sowohl die Stempelanordnung 2, als auch die Gesenkanordnung 3, durch zumindest einen Biegestempel bzw. zumindest ein Biegegesenk gebildet sein. Durch Aneinanderreihung der Biegestempel bzw. der Biegegesenke in einer jeweiligen Aufnahmevorrichtung lässt sich Biegewerkzeuganordnung 1 bis zur maximal möglichen Breite der Biegemaschine bilden. Eine Biege-Kontaktfläche 4 der Stempelanordnung 2 und zumindest eine Biege-Kontaktfläche 5 der Gesenkanordnung sind parallel zueinander und parallel zu einer Biegelinie 6 ausgerichtet.

In der Stempelanordnung 2 ist eine optische Bilderfassungsvorrichtung 7 angeordnet, wobei die Bilderfassungsvorrichtung 7 ein Objektiv 8 aufweist, welches Objektiv 8 auf einen Abschnitt 9 des umzuformenden Bleches parallel zur Biegelinie 6 ausgerichtet ist. Ferner weist das Objektiv 8 mehrere diskrete Brennweiten 10 auf.

Der Abschnitt 9 wird bevorzugt durch einen Längsabschnitt der Biegelinie 6 und durch einen sich normal zur Biegelinie erstreckenden Längsabschnitt aufgespannt. Der Abschnitt ist jedenfalls derart gewählt, dass während des gesamten Biegevorgangs, das sich aufbiegende Blech im aufgespannten Abschnitt befindet und somit vom Objektiv 8 der Bilderfassungsvorrichtung 7 erfasst werden kann. Es ist natürlich auch möglich, dass der Abschnitt durch einen zur Biegelinie 6 beabstandeten Längsabschnitt und/oder einen sich unter einem nicht normalen Winkel zur Biegelinie 6 erstreckenden Längsabschnitt aufgespannt wird.

Fig. 1a zeigt eine stark vereinfachte schematische Darstellung der gegenständlichen Biegewerkzeuganordnung 1 wobei zur Verdeutlichung des Funktionsprinzips, die Bilderfassungsvorrichtung 7 als Modul dargestellt ist, welches an einem Biegestempel der Stempelanordnung 2 angeordnet ist. Weitere mögliche Ausführungsformen werden im Weiteren beschrieben.

Fig. 1b zeigt eine schematische Darstellung des Objektivs 8, welches in Richtung des Abschnitts 9 der Blechoberfläche 11 ausgerichtet ist. Das Objektiv 8 ist in der Darstellung als Fächer- bzw. Fresnell-Linse ausgebildet. Eine Fächer- bzw. Fresnellsche Stufenlinse ist eine optische Linse mit einem sehr speziellen Bauprinzip, um Linsen mit kurzer Brennweite kompakt ausführen zu können. Gemäß dem Brechungsgesetzt weisen Linsen mit geringer Brennweite im achsnahen Bereich eine große Dicke auf, wodurch sie meist sehr schwer bzw. teuer in der Herstellung wurden. Eine Fresnell-Linse ist segmentiert aufgebaut, wobei jeder Segmentabschnitt den, der Brennweite entsprechenden Krümmungsradius aufweist. Auf eine weitere Beschreibung der an sich bekannten Fresnellschen Stufenlinse wird hierin verzichtet. Die gegenständliche Fächer- bzw. Fresnell-Linse des Objektivs 8 wurde dahingehend modifiziert, dass jedes Segment 12 des Objektivs 8, eine unterschiedliche Krümmung und somit eine unterschiedliche Brennweite 10 aufweist. Wie an sich bekannt, ist in Abhängigkeit von der Brennweite und einer gewählten Blendenöffnung, ein bestimmter Schärfentiefenbereich erreichbar. Bei der Ausführung des gegenständlichen Objektivs 8 wird dies dahingehend ausgenutzt, dass der Schärfentiefenbereich während des Aufbiegens des Bleches von einem Segment 12 des Objektivs 8 zum nächsten wandert.

Im ungebogenen Zustand werden die Blechoberfläche 11 und die optische Mittenachse 13 des Objektivs 8 einen rechten Winkel einschließen. Die Brennweite des ersten Segments 14 ist so gewählt, dass bei Annäherung der Stempelanordnung 2 an das zu biegende Blech, die Blechoberfläche 11 zuerst im ersten Segment scharf fokussierbar ist. Durch Weiterbewegung der Stempelanordnung 2 in Richtung der Gesenkanordnung 3 kommt es zu einem Aufbiegen 15 des Bleches, was dazu führt, dass die sich aufbiegende 15 Blechoberfläche 11 in den Schärfentiefebereich des zweiten 16 bzw. dritten 17 Segments kommt. Durch eine Verfolgung des Schärfenverlaufs, also in welchem Segment 14, 16, 17 die Blechoberfläche 11 scharfstellbar ist, kann von einer (nicht dargestellten) Auswertevorrichtung jener Bereich ermittelt werden, in welchem der Biegewinkel des gebogenen Bleches liegt. Durch weitere Auswertung eines Fokussignals kann somit innerhalb des ermittelten Biegewinkelbereichs der genau erreichte Biegewinkel ermittelt werden. Wird bspw. stark reflektierendes (spiegelndes) Blech gebogen kann es von Vorteil sein, wenn zwischen der optischen Mittenachse 13 und der Blechoberfläche 11 kein rechter Winkel gewählt wird, sondern bspw. ein Winkel zwischen 70° und 90°.

Die optische Bilderfassungsvorrichtung 7 weist ferner einen flächigen Bildsensor 18 auf, welcher die von den einzelnen Fokusabschnitten bzw. Segmenten 12 des Objektivs 8 eintreffenden Lichtstrahlen erfasst und in elektrische Signale bzw. direkt in ein Bilddatenformat umwandelt.

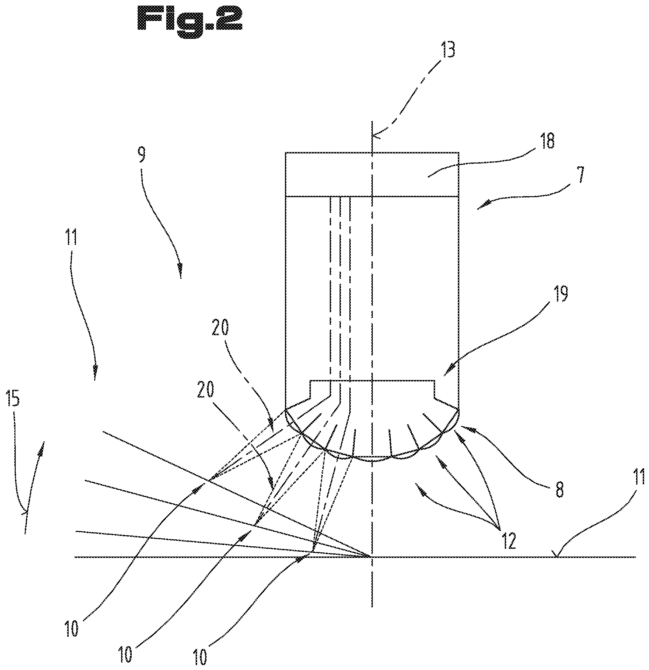

Fig. 2 zeigt eine weitere mögliche Ausführung der gegenständlichen Biegewerkzeuganordnung, wobei aus Vereinfachungsgründen lediglich die Bilderfassungsvorrichtung 7 dargestellt ist, da hier Unterschiede zur ersten Ausführung bestehen. Ähnlich wie in Fig. 1a, wird die Bilderfassungsvorrichtung 7 an der Stempelanordnung bzw. der Gesenkanordnung angeordnet sein. Die Bilderfassungsvorrichtung 7 weist jedoch mehrere diskrete Objektive 8 auf, wobei jedes Objektiv wiederum eine diskrete Brennweite 10 aufweist. Zur Aufnahme der von den einzelnen Objektiven 8 erfassten Abschnitte der Blechoberfläche und Umwandlung des erfassten Abbilds in ein Bilddatenformat, weist die Bilderfassungsvorrichtung 7 ebenfalls einen Bildsensor 18 auf. Ferner ist vorgesehen, dass zur Lenkung der von den einzelnen Objektiven 8 aufgenommenen Abbilder auf den Bildsensor 18, ein Strahlteiler 19 vorhanden ist. Damit wird erreicht, dass ohne zusätzliche Ablenkungsvorrichtungen, der Strahlengang 20 in Richtung des Bildsensors 18 umgelenkt wird. Durch eine integrierte Ausführung des Strahlteilers, beispielsweise als Mehrfachprisma, wird eine integrierte Anordnung geschaffen, die robust und insbesondere wartungsfrei ausgeführt werden kann, was insbesondere für den Einsatz bei einer Biegepresse den Vorteil hat, dass sich die durch den Strahlteiler festgelegten Winkelbeziehungen zwischen den einzelnen Teilstrahlen aufgrund von Erschütterungen beim bestimmungsgemäßen Einsatz und Betrieb der Werkzeugmaschine nicht verändern können.

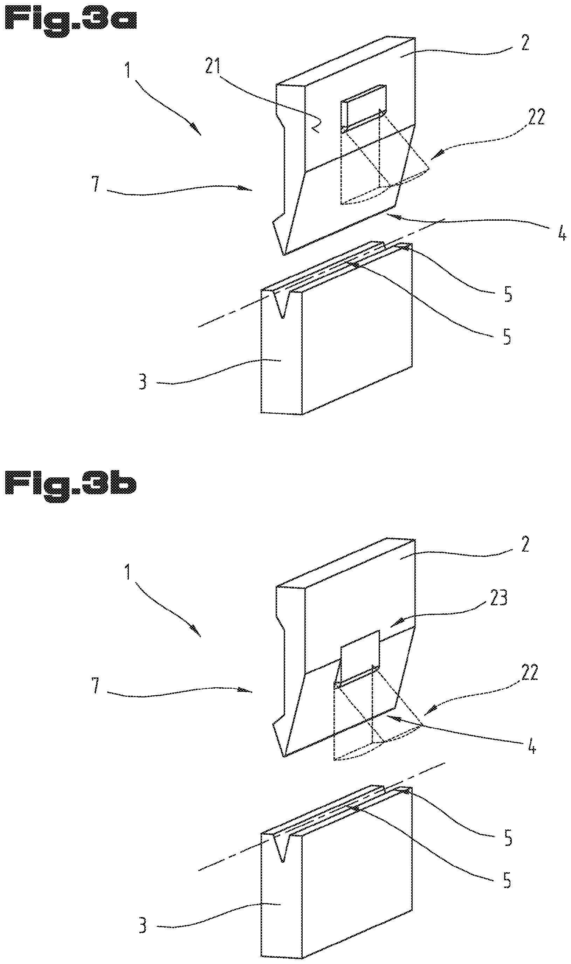

In den Fig. 3 sind weitere mögliche Ausführungen der gegenständlichen Biegewerkzeuganordnung 1 dargestellt. In Fig. 1a ist eine Bilderfassungsvorrichtung 7 dargestellt, welche seitlich an der Stempelanordnung 2 angeordnet ist und einen zumeist symmetrischen Bereich beidseits der Stempelanordnung 2 erfassen kann. Wobei selbstverständlich auch nur ein einseitiger Erfassungsbereich vorgesehen sein kann, wenn dies für den Biegeablauf vorteilhaft ist (bspw. bei einer nur einseitigen Aufbiegung des Bleches).

Es ist jedoch auch möglich, dass die Bilderfassungsvorrichtung 7 an einer Längsfläche 21 der Stempelanordnung 2 angeordnet ist und die Aufbiegung somit nur in einem Raumabschnitt 22 auf einer Seite der Stempelanordnung 2 erfasst. Da es beim Gesenkbiegen zumeist zu einem symmetrischen Aufbiegen der beiden Blechschenkel kommen wird, ist eine derartige Ausführung, insbesondere für einfache und kostengünstige Biegewerkzeuge, von Vorteil.

Eine weitere mögliche Ausführung ist in Fig. 3b dargestellt. Dabei ist in der Längsfläche 21 der Stempelanordnung 2 eine Ausnehmung 23 vorgesehen, in welcher Ausnehmung die Bilderfassungsvorrichtung 7 angeordnet ist. Auch bei dieser Ausführungsvariante erfasst die Bilderfassungsvorrichtung 7 lediglich einen Raumabschnitt 22 auf einer Seite der Stempelanordnung 2.

In einer weiteren Ausführungsvariante kann die Ausnehmung 23 als Durchbruch ausgebildet sein, sodass sich eine Situation ähnlich der in Fig. 1 dargestellten ergibt. Mit einer derartigen Ausführung kann die Bilderfassungsvorrichtung in Relation zur Biegelinie mittig im Werkzeug angeordnet sein und somit wiederum den Raumabschnitt zu beiden Seiten der Stempelanordnung erfassen. Im Unterschied zu der in Fig. 1a dargestellten Ausführung ist dann zusätzlich ein verbesserter Schutz der Bilderfassungsvorrichtung 7 gegeben.

In den Figuren wurde die Bilderfassungsvorrichtung 7 an der Stempelanordnung 2 angeordnet dargestellt. Gleichbedeutend ist es jedoch möglich, dass die Bilderfassungsvorrichtung 7 auch an der Gesenkanordnung 3 angeordnet ist, wobei wiederum die dargestellten Ausführungen seitlich an, längs auf sowie längs im bzw. längs durch möglich sind.

Der große Vorteil der gegenständlichen Biegewerkzeuganordnung liegt nun darin, dass während des Biegevorgangs eine kontaktlose Messung des sich aktuell einstellenden Biegewinkels möglich ist, wobei insbesondere auch die Erfassung langer Biegeteile möglich ist. Bei der Biegung langer Blechteile ergibt sich zumeist das Problem der Durchbiegung der Stempel bzw. Gesenkanordnung, sodass eine kontaktlose Messung aus seitlicher Richtung in Richtung der Stirnseite des Blechteils nur sehr ungenau möglich ist, da es durch die auftretenden Deformationen zu einer Abschattung des Erfassungsbereichs kommen kann. Insbesondere ist es mit der gegenständlichen Biegewerkzeuganordnung jedoch möglich, dass in der Stempelanordnung bzw. Gesenkanordnung mehrere Bilderfassungsvorrichtungen vorgesehen sind, sodass über die gesamte Länge der Biegelinie eine genaue Bestimmung des Biegewinkels möglich ist.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

In den Fig. 2 und 3 sind weitere und gegebenenfalls für sich eigenständige Ausführungsform der Biegewerkzeuganordnung gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in den vorangegangenen Fig. 1 hingewiesen bzw. Bezug genommen.

Die Ausführungsbeispiele zeigen mögliche Ausführungsvarianten der Biegewerkzeuganordnung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Des Weiteren können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Fig. 2 und 3 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus der Biegewerkzeuganordnung diese bzw. deren Bestandteile teilweise unmaßstäblich und/oder vergrößert und/oder verkleinert dargestellt wurden.

### Bezugszeichenaufstellung

- 1: Biegewerkzeuganordnung
- 2: Stempelanordnung
- 3: Gesenkanordnung
- 4: Biege-Kontaktfläche der Stempelanordnung
- 5: Biege-Kontaktfläche der Gesenkanordnung
- 6: Biegelinie
- 7: Bilderfassungsvorrichtung
- 8: Objektiv
- 9: Abschnitt
- 10: Brennweite
- 11: Blechoberfläche
- 12: Segment des Objektivs
- 13: optische Mittenachse
- 14: erstes Segment
- 15: Aufbiegung
- 16: zweites Segment
- 17: drittes Segment
- 18: Bildsensor
- 19: Strahlteiler
- 20: Strahlengang
- 21: Längsfläche
- 22: Raumabschnitt
- 23: Ausnehmung

## Patentansprüche

1. Biegewerkzeuganordnung (1) zur Ermittlung des Biegewinkels,
umfassend eine Stempelanordnung (2) und eine Gesenkanordnung (3),
wobei die Stempelanordnung (2) aus zumindest einem Biegestempel
und die Gesenkanordnung (3) aus zumindest einem Biegegesenk gebildet ist,
und wobei eine Biege-Kontaktfläche (4) der Stempelanordnung (2) und zumindest eine Biege-Kontaktfläche (5) der Gesenkanordnung (3) parallel zueinander und parallel zu einer Biegelinie (6) ausgerichtet sind,
**dadurch gekennzeichnet, dass**
in der Stempelanordnung (2) oder in der Gesenkanordnung (3)
eine optische Bilderfassungsvorrichtung (7) mit einem Objektiv (8) angeordnet ist, wobei das Objektiv (8) auf einen Abschnitt (9) parallel zur Biegelinie (6) ausgerichtet ist und wobei das Objektiv (8) mehrere diskreten Brennweiten (10) aufweist.

2. Biegewerkzeuganordnung (1) zur Ermittlung des Biegewinkels,
umfassend eine Stempelanordnung (2) und eine Gesenkanordnung (3),
wobei die Stempelanordnung (2) aus zumindest einem Biegestempel
und die Gesenkanordnung (3) aus zumindest einem Biegegesenk gebildet ist,
und wobei eine Biege-Kontaktfläche (4) der Stempelanordnung (2) und zumindest eine Biege-Kontaktfläche (5) der Gesenkanordnung (3) parallel zueinander und parallel zu einer Biegelinie (6) ausgerichtet sind,
**dadurch gekennzeichnet, dass**
in der Stempelanordnung (2) oder in der Gesenkanordnung (3)
eine optische Bilderfassungsvorrichtung (7) mit mehreren Objektiven (8) angeordnet ist, wobei die Objektive (8) auf einen Abschnitt (9) parallel zur Biegelinie (6) ausgerichtet sind und wobei jedes Objektiv (8) eine diskrete Brennweite (10) aufweist.

3. Biegewerkzeuganordnung nach Anspruch 1, **dadurch gekennzeichnet, dass** das Objektiv (8) als Fächerlinse bzw. Fresnel-Linse ausgebildet ist.

4. Biegewerkzeuganordnung nach Anspruch 2, **dadurch gekennzeichnet, dass** das Objektiv (8) einen Strahlteiler (19) aufweist.

5. Biegewerkzeuganordnung nach einem der Ansprüche 1 oder 3 bis 4, **dadurch gekennzeichnet, dass** das Objektiv (8) eine einstellbare Brennweite (10) aufweist.

6. Biegewerkzeuganordnung nach einem der Ansprüche 1 bis 5, **dadurch gekennzeichnet, dass** die Bilderfassungsvorrichtung (7) einen flächigen Bildsensor (18) aufweist.

7. Biegewerkzeuganordnung nach Anspruch 6, **dadurch gekennzeichnet, dass** die Bilderfassungsvorrichtung (7) ein Kontrastauswertungs- bzw. ein Phasenvergleichsmodul aufweist.

8. Biegewerkzeuganordnung nach einem der Ansprüche 1 bis 7, **dadurch gekennzeichnet, dass** die Bilderfassungsvorrichtung (7) einen Linien- und/oder einen Kreuzsensor aufweist.

9. Biegewerkzeuganordnung nach einem der Ansprüche 1 bis 8, **dadurch gekennzeichnet, dass** die Bilderfassungsvorrichtung (7) einen Befestigungsabschnitt aufweist, welcher als magnetische Haltevorrichtung ausgebildet ist.

10. Biegewerkzeuganordnung nach einem der Ansprüche 1 bis 9, **dadurch gekennzeichnet, dass** die Bilderfassungsvorrichtung (7) in einer Ausnehmung des Biegestempels oder des Biegegesenks angeordnet ist.

11. Biegewerkzeuganordnung nach einem der Ansprüche 1 bis 10, **dadurch gekennzeichnet, dass** die Bilderfassungsvorrichtung (7) eine Beleuchtungsvorrichtung aufweist.

12. Verfahren zur Ermittlung des Biegewinkels während der Biegung eines Blechteils auf einer Biegepresse mit einer Biegewerkzeuganordnung nach Anspruch 1 oder 2, oder nach einem der Ansprüche 3 bis 11,
wobei die Stempel- und Gesenkanordnung (3) der Biegewerkzeuganordnung mittels eines, von einer Maschinensteuerung gesteuerten Antriebsmittel, relativ zueinander bewegt werden kann,
wobei ferner ein zu biegender Blechteil in einer Offenstellung der Stempel- und Gesenkanordnung (3) eingelegt und anschließend die Stempel- und Gesenkanordnung (3) soweit geschlossen wird, bis die Stempelanordnung (2) das Blechteil entlang der Biegelinie (6) kontaktiert,
wobei anschließend vom Antriebsmittel der Biegepresse auf die Stempel- und/oder Gesenkanordnung (3) ein Pressdruck aufgebracht wird, wodurch sich die Stempel- und Gesenkanordnung (3) weiter aufeinander zubewegen und somit die Biegeumformung des Blechteils durchführen,
**dadurch gekennzeichnet, dass**
von der Optik der Bilderfassungsvorrichtung (7) eine der Bilderfassungsvorrichtung (7) zugewandte Oberfläche des Blechteils erfasst und für eine Brennweite (10) ein Fokussignal generiert wird,
und dass von der Maschinensteuerung das generierte Fokussignal mit einem Referenz-Fokussignal verglichen wird und bei Übereinstimmung das Antriebsmittel gestoppt wird.

13. Verfahren nach Anspruch 12, **dadurch gekennzeichnet, dass** das Fokussignal während der Biegeumformung einen nicht-stetigen Verlauf ausbildet und durch Auswertung der Unstetigkeitsstellen, ein Biegewinkelbereich ermittelt wird.

14. Verfahren nach Anspruch 12, **dadurch gekennzeichnet, dass** durch Auswerten des Fokussignals der mehreren Objektive (8) der Bilderfassungsvorrichtung (7), ein Biegewinkelbereich ermittelt wird.

## Claims

1. A bending tool assembly (1) for determining the bending angle, comprising a punch assembly (2) and a die assembly (3),
wherein the punch assembly (2) is formed by at least one bending punch and the die assembly (3) is formed by at least one bending die,
and wherein a bending contact surface (4) of the punch assembly (2) and at least one bending contact surface (5) of the die assembly (3) are orientated parallel to each other and parallel to a bending line (6),
**characterized in that**
an optical image capture device (7) having a lens (8) is disposed in the punch assembly (2) or in the die assembly (3), wherein the lens (8) is orientated on a section (9) parallel to the bending line (6) and wherein the lens (8) has a plurality of discrete focal lengths (10).

2. A bending tool assembly (1) for determining the bending angle,
comprising a punch assembly (2) and a die assembly (3),
wherein the punch assembly (2) is formed by at least one bending punch and the die assembly (3) is formed by at least one bending die,
and wherein a bending contact surface (4) of the punch assembly (2) and at least one bending contact surface (5) of the die assembly (3) are orientated parallel to each other and parallel to a bending line (6),
**characterized in that**
an optical image capture device (7) having a plurality of lenses (8) is disposed in the punch assembly (2) or in the die assembly (3), wherein the lenses (8) are orientated on a section (9) parallel to the bending line (6) and wherein each lens (8) has a discrete focal length (10).

3. The bending tool assembly as claimed in claim 1, **characterized in that** the lens (8) is configured as a fan lens or Fresnel lens.

4. The bending tool assembly as claimed in claim 2, **characterized in that** the lens (8) is provided with a beam splitter (19).

5. The bending tool assembly as claimed in claim 1 or claim 3 or claim 4, **characterized in that** the lens (8) has an adjustable focal length (10).

6. The bending tool assembly as claimed in one of claims 1 to 5, **characterized in that** the image capture device (7) is provided with a flat image sensor (18).

7. The bending tool assembly as claimed in claim 6, **characterized in that** the image capture device (7) is provided with a contrast evaluation module or a phase comparison module.

8. The bending tool assembly as claimed in one of claims 1 to 7, **characterized in that** the image capture device (7) is provided with a line sensor and/or a cross-type sensor.

9. The bending tool assembly as claimed in one of claims 1 to 8, **characterized in that** the image capture device (7) is provided with a fastening section which is configured as a magnetic retaining device.

10. The bending tool assembly as claimed in one of claims 1 to 9, **characterized in that** the image capture device (7) is disposed in a recess of the bending punch or the bending die.

11. The bending tool assembly as claimed in one of claims 1 to 10, **characterized in that** the image capture device (7) is provided with a lighting device.

12. A method for determining the bending angle during bending of a sheet metal part in a bending press using a bending tool assembly as claimed in claim 1 or claim 2, or as claimed in one of claims 3 to 11,
wherein the punch assembly and die assembly (3) of the bending tool assembly can be moved relative to each other by means of a driving means controlled by a machine control system,
wherein furthermore, in an open position of the punch and die assembly (3), a sheet metal part to be bent is positioned and subsequently the punch and die assembly (3) is closed until the punch assembly (2) contacts the sheet metal part along the bending line (6),
wherein subsequently, a compressive force is applied by the driving means of the bending press to the punch assembly and/or die assembly (3), whereupon the punch assembly and die assembly (3) move further towards each other and thus carry out the bending deformation of the sheet part,
**characterized in that**
a surface of the sheet part which faces the image capture device (7) is detected by the optics of the image capture device (7) and a focus signal is generated for a focal length (10),
and **in that** the generated focus signal from the machine control system is compared with a reference focus signal and the driving means is stopped when correspondence is reached.

13. The method as claimed in claim 12, **characterized in that** during the bending deformation, the focus signal generates a discontinuous profile and a bending angle range is determined by analysis of the points of discontinuity.

14. The method as claimed in claim 12, **characterized in that** a bending angle range is determined by analysis of the focus signals from the plurality of lenses (8) of the image capture device (7).

## Revendications

1. Disposition d'outil de pliage (1) pour la détermination de l'angle de pliage, comprenant une disposition de poinçon (2) et une disposition de matrice (3), la disposition de poinçon (2) étant constituée d'au moins un poinçon de pliage et la disposition de matrice (3) étant constituée d'au moins une matrice de pliage, et une surface de contact de pliage (4) de la disposition de poinçon (2) et au moins une surface de contact de pliage (5) de la disposition de matrice (3) étant orientées parallèlement entre elles et parallèlement à une ligne de pliage (6),
**caractérisé en ce que**
dans la disposition de poinçon (2) ou dans la disposition de matrice (3), se trouve un dispositif optique de capture d'image (7) avec un objectif (8), l'objectif (8) étant orienté, dans une portion (9), parallèlement à la ligne de pliage (6) et l'objectif (8) comprenant plusieurs distances focales discrètes (10).

2. Disposition d'outil de pliage (1) pour la détermination de l'angle de pliage, comprenant une disposition de poinçon (2) et une disposition de matrice (3), la disposition de poinçon (2) étant constituée d'au moins un poinçon de pliage et la disposition de matrice (3) étant constituée d'au moins une matrice de pliage, et une surface de contact de pliage (4) de la disposition de poinçon (2) et au moins une surface de contact de pliage (5) de la disposition de matrice (3) étant orientées parallèlement entre elles et parallèlement à une ligne de pliage (6),
**caractérisé en ce que**
dans la disposition de poinçon (2) ou dans la disposition de matrice (3), se trouve un dispositif optique de capture d'image (7) avec plusieurs objectifs (8), les objectifs (8) étant orientés, sur une portion (9), parallèlement à la ligne de pliage (6) et chaque objectif (8) présentant une distance focale discrète (10).

3. Disposition d'outil de pliage selon la revendication 1, **caractérisé en ce que** l'objectif (8) est conçu comme une lentille à compartiments ou une lentille de Fresnel.

4. Disposition d'outil de pliage selon la revendication 2, **caractérisé en ce que** l'objectif (8) comprend un diviseur de faisceau (19).

5. Disposition d'outil de pliage selon l'une des revendications 1 ou 3 à 4, **caractérisé en ce que** l'objectif (8) présente une distance focale (10) réglable.

6. Disposition d'outil de pliage selon l'une des revendications 1 à 5, **caractérisé en ce que** le dispositif de capture d'image (7) comprend un capteur d'image plat (18).

7. Disposition d'outil de pliage selon la revendication 6, **caractérisé en ce que** le dispositif de capture d'image (7) comprend un module d'analyse de contraste ou de comparaison de phase.

8. Disposition d'outil de pliage selon l'une des revendications 1 à 7, **caractérisé en ce que** le dispositif de capture d'image (7) comprend un capteur linéaire et/ou un capteur croisé.

9. Disposition d'outil de pliage selon l'une des revendications 1 à 8, **caractérisé en ce que** le dispositif de capture d'image (7) comprend un une portion de fixation, qui est conçue comme un dispositif de maintien magnétique.

10. Disposition d'outil de pliage selon l'une des revendications 1 à 9, **caractérisé en ce que** le dispositif de capture d'image (7) est disposé dans un évidement du poinçon de pliage ou de la matrice de pliage.

11. Disposition d'outil de pliage selon l'une des revendications 1 à 10, **caractérisé en ce que** le dispositif de capture d'image (7) comprend un dispositif d'éclairage.

12. Procédé de détermination de l'angle de pliage pendant le pliage d'une pièce en tôle sur une presse plieuse avec une disposition d'outil de pliage selon la revendication 1 ou 2, ou selon l'une des revendications 3 à 11,
la disposition de poinçon et de matrice (3) de la disposition d'outil de pliage pouvant être déplacées l'une par rapport à l'autre au moyen d'un moyen d'entraînement commandé par un dispositif de commande de machine,
en outre une pièce de tôle à plier étant insérée dans une position ouverte de la disposition de poinçon et de matrice (3) puis la disposition de poinçon et de matrice (3) étant fermée jusqu'à ce que la disposition de poinçon (2) entre en contact avec la pièce de tôle le long de la ligne de pliage (6),
le moyen d'entraînement de la presse plieuse permettant ensuite d'appliquer une pression sur la disposition de poinçon et/ou de matrice (3), ce qui permet de déplacer les dispositions de poinçon et de matrice (3) l'une vers l'autre et donc d'effectuer le pliage de la pièce de tôle,
**caractérisé en ce que**
l'optique du dispositif de capture d'image (7) capture une surface de la pièce de tôle orientée vers le dispositif de capture d'image (7) et génère un signal de focalisation pour une distance focale (10), et
**en ce que** le dispositif de commande de la machine compare le signal de focalisation généré avec un signal de focalisation de référence et le moyen d'entraînement est arrêté dans le cas d'une correspondance.

13. Procédé selon la revendication 12, **caractérisé en ce que** le signal de focalisation présente pendant le pliage un tracé non continu et une plage d'angle de pliage est déterminée par l'analyse des points de discontinuité.

14. Procédé selon la revendication 12, **caractérisé en ce que** l'analyse du signal de focalisation des plusieurs objectifs (8) du dispositif de capture d'image (7) permet de déterminer une plage d'angle de pliage.
